Europäisches Patentamt

**European Patent Office**

Office européen des brevets

(19)

(11) Publication number: **0 066 270**

A2

(12)

# EUROPEAN PATENT APPLICATION

(21) Application number: 82104666.1

(22) Date of filing: 27.05.82

(51) Int. Cl.³: **C 12 C 1/16**
**C 12 C 7/04**

(30) Priority: 27.05.81 US 267600

(43) Date of publication of application:
08.12.82 Bulletin 82 49

(84) Designated Contracting States:
AT BE CH DE FR GB LI NL SE

(71) Applicant: LABATT BREWING COMPANY LIMITED
150 Simcoe Street
London, Ont. N6A 4M3(CA)

(72) Inventor: Gracey, David Edward Fergus
738 Cranbrook Road
London Ontario N6K 1W9(CA)

(72) Inventor: Barker, Robert Leslie
32 Beattie Street East
Lambeth Ontario N0L 1SO(CA)

(74) Representative: Kraus, Walter, Dr. et al,
Patentanwälte Dres. Kraus & Weisert Irmgardstrasse 15
D-8000 München 71(DE)

(54) Improvements in brewing.

(57) The present invention provides an economic brewing process wherein the malt practically prior to mashing is treated with hydrogen peroxide to eliminate undesirable bacterial contamination which, it has now been found, plays a significant role in haze formation. Consequently, use of the usual types and/or amounts of chill proofing aids/steps are not required and the products exhibit excellent physical stability and flavour characteristics.

BAD ORIGINAL

The present invention relates to brewing and in particular, a brewing process for economically producing stable alcoholic brewery beverages, for example, beer and ale.

## Background of Invention

Beers, that term used here for convenience to include ales, etc., as produced by the brewer are generally brilliantly clear liquids. The beer is widely distributed in convenient bottles and cans which, during distribution and subsequent sale, are subject to a wide array of temperature and other non-brewer controlled storage conditions for varying lengths of time. As a result, there is a tendency for a "haze" to develop in the beer prior to its being taken up for consumption. In common with many consumer products, beer has a definite shelf life determined largely by its physical stability, which is a measure of the beers ability to withstand development of turbidity or "haze" over a period of time. It is possible for such haze to result from infiltration of the beer itself by bacteria or of the yeast but with modern pasteurization and sterile filtration techniques, such biolgical hazes are today very uncommon and indeed, have not been a topic actively pursued by brewers for some time. It is the so-called non-biological hazes which are presently considered to pose problems and the universal concern of brewers in combatting such problems is reflected in the enormous research effort expended in this area over the last three decades, as reference to the literature will readily testify. Two types of non-biological haze are generally recognized.

(i)     Permanent (warm) haze which forms and persists in the beer at room temperature; and

(ii)    Chill (reversible) haze which may form when the beer is suddenly cooled to 0°C. This will generally redissolve when the beer is warmed up again to ambient but becomes permanent as the beer ages.

Both hazes eventually lead to deposition of a sediment in the packaged products; however, chill haze is of more immediate concern to the brewer since it appears sooner and because the beer is normally consumed at refrigerated temperatures. It should be noted that each of the permanent and chill hazes consist of more than one component having different chemical and physical characteristics. As a consequence, it would not be expected that the haze problems be solved with any single type of treatment. This compositional complexity of hazes has been long documented and, prior to the 1950's, it had been long known that proteinaceous material was a significant haze component, making up some 45-65% of the haze. In the late 1950's it became increasingly mentioned that polyphenolic compounds (tannins) were present in significant amounts (up to 20% of the some hazes) and this resulted in a theory being advanced for the forming of haze in beer being advanced which was analogous to the tanning of hides in the leather industry. Thus a major cause of the haze is considered to be the formation of a polymerized polyphenol-protein complex which precipitates out. This theory has pre-dominated to this day and has become so strong that it has acquired "textbook status" throughout the brewing industry despite the fact that direct experimental therefor has apparently never been advanced.

As of today, it is therefore axiomatic for the brewer to conclude that the presence of "sensitive" proteins and polymerizable polyphenols in beer will lead to haze formation and, consequently, it may be projected that a reduction in concentration in either, or both, groups of macromolecules should confer improved physical stability to the beer. Several production process parameters may be utilized to achieve that end for example;

(i)     lower mash pH to levels where polyphenols are less soluble;

(ii)    chill the beer as cold as possible in storage and remove the formed haze by filtration.

However, in practice, the variations which can be made to those brewing process parameters are subjected to various constraints, not only production expediency, economic or energy considerations, but also the need to optimize parmeters such as wort fermentability and finished beer flavour. The result is that the inherent physical stability of the beer falls far short of what the market place demands.

Consequently, the brewer therefore has resorted to additional steps, all of which are based, as the present theory dictates, on means for desensitizing or reducing the concentration of either or both of the perceived major protagonists of haze. Treatments used include the following:

## For the Protein Component

(a)     Modification by enzymes during beer storage: enzymes used include papain, bromelin and ficin;

(b)     Removal by (i) precipitation with tannic acid during storage.

(ii) adsorption on bentonite clays or activated silica gels prior to or during final filtration operations.

## For the Polyphenol Component

Removal by adsorption on insoluble polyvinylpyrrolidine (PVPP) or Nylon 6,6 prior to or during final filtration operations.

Each individual treatment provides some advantage and generally, composite treatments such as the use of PVPP plus proteolytic enzyme have been, and are, used extensively. However, although it may be possible to achieve the desired stability by removing significant amounts of the protein and/or polyphenol components, excessive removal is neither practical nor desirable since other equally important characteristics of the beer product would be adversely affected. For example, proteins contribute to "body" and are critical in head formation and retention. On the other hand, the polyphenols contribute to flavour, particularly the bitter and astringency notes.

A further important factor and one which mitigates against using solely the above approaches is that the characteristics of the raw materials used can fluctuate quite significantly e.g. seasonally and the brewer must therefore wrestle constantly with a treatment-versus-effect equation. It is not uncommon, for example, for outbreaks of instability to be encountered which respond poorly, or not at all, to established practices and these outbreaks can entail costly revamping of stabilizing regimes to rectify the situation. A further possibility, long known to brewers, has been to utilize formaldehyde in the mash. Its use is presumed to promote the cross-linking of the polyphenols which are only solubilized, and consequently become susceptible to treatment only during the latter stages of the mashing process, in a manner, it is thought analogous to the well-known phenol-formaldehyde resin reaction; the polyphenols then proceeding to form insoluble complexes with the protein as assumed by the presently accepted theory, which complexes may then be removed by filtration or another separation process. However, this has not been considered a practical measure by many brewers in a majority of countries because of the toxicity of formaldehyde and the potential for residues surviving through to the finished product. Indeed, for that reason many countries, including Canada and the United States, preclude use of formaldehyde in the production of beer.

It has been reported, in Canadian Patent No. 632,393, that the polymerization of the polyphenols can also be achieved by the use of peroxidase and hydrogen peroxide. The specification indicates that the hydrogen peroxide may be added to the mash, in which case peroxidase from the malt may be utilized. However, since the precipitatable constituents are not even solubilized, at least in any significant quantities, until late in the mashing process and hydrogen peroxide, as is well known, is readily and rapidly decomposed in aqueous media, there would be little point when following the teaching of the patent, to add the hydrogen peroxide to the mash much before the end of the mashing cycle. In fact, as the specificiation clearly indicates, the hydrogen peroxide/peroxidase oxidation step is always practically effected subsequent to the completion of the mashing process, usually on the boiled wort, and even as late as on the brewed product itself. It is noteworthy that the specific amount of hydrogen peroxide actually stated to be required is given only for additions to the wort or the fermented product; the amount ranging from about 10 to 100 ppm, based on the volume of wort, although it is stated that up to 200 ppm of hydrogen peroxide has been added "without detectable ill effects", and presumedly, without any beneficial effects being noted. Finally, the precipitate said to result from the oxidation step, is removed by filtration or another separation process. To applicant's knowledge, this process has never been embraced commercially possibly because, at the relatively late stage in the brewing process one is taught to carry out the hydrogen peroxide/ peroxidase treatment, there is an unacceptable possibility that already formed final product constituents and hence characteristics may be adversely affected.

It is an object of the present process to provide a brewing process which yields an alcoholic brewery beverage having improved physical stability.

## Summary of Invention

Following extensive investigation it has been found that phosphate-bearing macromolecules previously undetected in beer haze play a significant role in the formation of the haze in the beer by complexing with protein. Moreover, the phosphate bearing macromolecules were found to be Teichoic acid which was highly surprising since Teichoic acid emanates from a bacterial source and as indicated above, for a long time the brewing industry has automatically discounted the possibility of bacterial factors in haze formation. In fact, the macromolecules originate from cell fragments of certain Gram-positive bacteria carried by the malt. The macromolecules are apparently soluble and not removed to any significant extent throughout a normal brewing process. Consequently, they carry through to the fermented product where they are responsible for the formation of a significant portion of the haze. The ability of said macromolecules to readily produce haze in alcoholic brewery products such as beer has been clearly demostrated by applicant in trials involving the addition of discrete amounts of cell debris, isolated from Gram-positive bacteria, to otherwise stable alcoholic brewery products. It should also be noted that such macromolecules once present are not significantly affected, under the conditions extant in a brewing process, by hydrogen peroxide.

The above finding led to the realization that eliminating or significantly reducing the bacterial contamination in the malt used in the malt mash before it has an opportunity to increase in population would result in less cells being broken down especially at kettle boiling stage and consequently none, or only a reduced number, of cell fragments carrying through the process. The end result is a large reduction in the amount of phosphate-bearing macromolecules which consequently cannot, or can only to a reduced extent, take part in complex formation with protein which constitutes a significant proportion of the usual haze in the aged products.

In summary, the above described finding leads to a new practical route to improving inter alia the physical stability of beer by _preventing_ complex formation and consequently haze, a route directly opposite to the above-described treatment with hydrogen peroxide, where, supported by presently accepted theory, the objective was to induce the formation of insoluble complexes and subsequently remove same prior to packaging the beer. The latter objective resulted in the hydrogen peroxide being introduced into the wort or even the beer which not only means the objective of the present invention cannot be achieved, (the hydrogen peroxide does not convert the said phosphate bearing macromolecules to an insoluble form), but also that other sensitive components in the wort or beer are subjected to the possibly adverse effects of the hydrogen peroxide.

Detailed Statement of Invention

According to the present invention, in a brewing process comprising preparing a malt wort, optionally adding an adjunct thereto, boiling same optionally with the addition of hops, fermenting same to form green beer which is then finished to form the desired product, the improvement comprising preparing said malt wort with malt which has been rendered substantially free of active Gram-positive bacteria by treatment with hydrogen peroxide.

The treatment of the malt may be effected prior to, and separate from, the mashing stage in the brewing process. However, for practical reasons, it is preferred that the treatment be effected substantially at the start of, in effect as a preliminary step to, the mashing process. In practical terms, this can comprise introducing hydrogen peroxide into the volume of water in which the mashing is to take place. In this way, the malt upon its subsequent introduction into the water, is automatically treated according to the present invention, for all practical purposes, before mashing actually commences. The hydrogen peroxide is used up relatively quickly and little, if any, survives the mashing stage.

According to a preferred embodiment of the present invention, in a brewing process involving preparing a malt wort, optionally adding adjunct, boiling same, optionally with the addition of hops, fermenting same, to form green beer which is then finished to form the desired product, the improvement comprising substantially eliminating haze generating bacterially-derived phosphate-bearing macromolecules from beer by treating the malt substantially at the start of mashing with up to 1,000 ppm, based on the amount of malt, of hydrogen peroxide.

The amount of hydrogen peroxide used according to the present invention may vary within relatively wide limits. However, amounts of more than 1000 ppm do not provide any significant advantages and, from a practical viewpoint, not more than 500 ppm is generally required. Also, from a practical viewpoint, it is preferred to use at least 200 ppm, and more preferable, at least 250 ppm, of hydrogen peroxide. It has further been found that, in general, ales require a higher concentration of hydrogen peroxide than lagers, and it is preferred that from 350 ppm to 500 ppm, especially about 450 ppm be used with ales and from 250 ppm to 350 ppm, especially about 300 ppm with lagers, all amounts being on a weight basis relative to the amount of malt.

Haze is generally measured by nephelometry and reported in Formazin Turbidity Units (FTU according to a standardized, and empirical, scale adopted by the American Society of Brewing Chemists (ASBC). A simplified visual interpretation of the ASBC scale is as follows:

|          |                  |
|----------|------------------|
| 200 FTU  | clear, bright    |
| 300 - 400 FTU | discernible veil |
| 450 FTU  | TURBID           |

In practice, above about 250 is considered noticeable to the consumer and, consequently commercially unacceptable.

Obviously, since haze normally develops in the fermented products over an extended period of time, procedures have been developed called "forcing tests , which, in a relatively short period of time (days) give a good indication of the probable extent of natural haze fermentation in a fermented brewery product maintained under commercial conditions over the expected normal shelf life of the product (up to three months or more). Such tests involve maintaining the product at elevated temperatures for extended periods of time. In this specification, the stability of the products produced according to the present invention are evaluated inter alia utilizing such forcing tests under stated conditions the use of which is fully familiar to a man skilled in this art.

The present invention will be further described but not limited by reference to the following specific examples. Hydrogen peroxide in its pure state is of course quite dangerous and consequently, in the Examples the hydrogen peroxide was used in the form of an aqueous solution containing 30% or 35% by weight of hydrogen peroxide, such solutions being commerically available (the product sold under the trade mark PERONE 35 (Registered Trade Mark) by Du Pont of Canada was used by the present applicant). The specific product used must, obviously, be of food grade quality.

## Example 1

A. An all-malt wort was prepared as follows:

In a mash mixer, 9894 g of malt in 33 litres of water was held at 118°F for twenty-five minutes, the temperature was raised to 152°F and held for thirty minutes and finally, raised to 170°F for six minutes, following which the mixer contents were lautered and sparged in a standard lauter tun. The resulting wort, in the amount of 60 litres, was hopped and boiled in the kettle for ninety minutes, adjusted to 12.05°P and pH 5.1, then pitched with ale yeast and finished according to established practices which included the use of chill proofing agents.

B. The procedure as outlined in A was repeated with the exception that 13.9 ml of hydrogen peroxide (in the form of a 30% aqueous solution) equivalent to 450 ppm based on the malt, was present in the mash liquor.

### Analysis of the Product

The products were analyzed and pertinent results are contained in Table I.

## Example 2

A. A 30% adjunct ale was produced as follows:

In the mash mixer, 6647 g of malt was mixed with 24 litres of water and held at a temperature of 118°F for twenty minutes. Separately in a cooker, 2632 g of corn and a minor amount of malt and calcium chloride was held at a temperature of 160°F for fifteen minutes in 9 litres of water, the mass boiled and then mixed with the malt in the mash mixer. The mixer contents were then raised to a temperature of 152°F which temperature was maintained for thirty minutes following which it was raised to

170°F and maintained for a further six minutes. The mixer contents were then dropped into a lauter tun and forged and provided 60 litres of wort at about 11.9°P. The wort was passed to the kettle, hopped and boiled for ninety minutes following which it was pitched with yeast, fermented and finished according to established practices.

B.       The procedure outlined in A was followed with the exception that 9.3 ml of hydrogen peroxide (in the form of a 30% aqueous solution, equivalent to 450 ppm based on the weight of malt was introduced into the mash liquor prior to mashing.

Anaylsis

The resulting beer was analyzed sd and pertinent data is included in Table I.

Example 3

A.       A control 30% adjunct lager was prepared following the same general procedure as given in Example 2 with the obvious changes required for lager production. For example, the wort was pitched with a yeast lager and the fermentation temperature was lowered to that normal for lagers. The lager was finished according to established procedures.

B.       The procedure given in A was followed with the exception that 6.2 ml of hydrogen peroxide (in the form of a 30% aqueous solution), equivalent to 300 ppm was introduced into the mash liquor prior to the malt addition.

A further series of ale and lager brews were carried out using the same general procedures as detailed above and these are detailed in Table 1b along with the corresponding product analysis.

TABLE 1a

| | H O ADDITION TO MASH WATER | CHILL HAZE (FTU) | | | COLOUR (STM) | FOAM (Sig) | pH | PROTEIN (%) | FORMOL NITROGEN (ppm) | ACIDITY (%) | % APP. EXTRACT |
|---|---|---|---|---|---|---|---|---|---|---|---|
| | | INITIAL | FORCING TEST ONE WEEK | | | | | | | | |
| EXAMPLE 1 — 12.05°P ALL MALT ALE | NIL | 90 | 323 | | 3.1 | 120 | 4.00 | 0.46 | 180 | 0.15 | 2.82 |
| | 450 mg per kg malt | 75 | 122 | | 3.5 | 120 | 4.00 | 0.39 | 141 | 0.16 | 2.86 |
| EXAMPLE 2 — 11.90°P. 30% ADJUNC ALE | NIL | 62 | 195 | | 2.0 | 116 | 3.65 | 0.32 | 113 | 0.14 | 2.73 |
| | 450 mg per kg malt | 48 | 53 | | 2.0 | 123 | 3.6 | 0.23 | 108 | 0.13 | 2.57 |
| EXAMPLE 3 — 11.8°P 30% ADJUNC LAGER | NIL | 50 | 100 | | 1.7 | 124 | 3.95 | 0.31 | 119 | 0.12 | 2.03 |
| | 300 mg per kg malt | 50 | 63 | | 1.7 | 121 | 4.05 | 0.28 | 116 | 0.11 | 2.04 |

TABLE 1b

| PILOT PLANT BREW | H2O2 ADDITION TO MASH WATER | CHILL HAZE (FIU) | | | COLOUR (STM) | FOAM (Slg) | pH | PROTEIN (%) | FORMOL NITROGEN (ppm) | ACIDITY (%) | % APP. EXTRACT |
|---|---|---|---|---|---|---|---|---|---|---|---|
| | | INITIAL | FORCING TEST | 90 DAYS @ 20°C | | | | | | | |
| EXAMPLE 5 — 11.8°P LAGER | NIL | 52 | 113 | 213 | 1.7 | 124 | 3.95 | 0.31 | 119 | 0.12 | 2.03 |
| | 300mg per kg malt | 50 | 70 | 120 | 1.7 | 121 | 4.05 | 0.28 | 116 | 0.11 | 2.04 |
| EXAMPLE 6 — 16°P LAGER | NIL | 45 | 61 | 80 | 2.4 | 105 | 4.30 | 0.32 | 164 | 0.12 | 2.00 |
| | 300mg per kg malt | 41 | 40 | 49 | 2.4 | 112 | 4.30 | 0.28 | 152 | 0.10 | 2.10 |
| EXAMPLE 7 — ALL MALT ALE | NIL | 104 | 580 | 640 | 3.1 | 120 | 4.0 | 0.46 | 180 | 0.16 | 2.02 |
| | 450mg per kg malt | 75 | 191 | 236 | 3.5 | 120 | 4.0 | 0.39 | 141 | 0.15 | 2.06 |
| EXAMPLE 8 — 30% ADJUNCT ALE | NIL | 64 | 260 | 295 | 2.0 | 116 | 3.65 | 0.30 | 113 | 0.14 | 2.73 |
| | 450 mg per kg malt | 47 | 66 | 98 | 2.0 | 123 | 3.60 | 0.25 | 100 | 0.13 | 2.57 |

Discussion

      As can be seen from the results, the only differences between the control and experimental pilot plant brews in each pairing was the peroxide addition. All the brews received equal amounts of proteolytic enzyme (PROTESAL available from Schwarz Services International Limited of New York) as the only other chill proofing measure. It should be emphasized that full production brews are more prone to result in less stable products and consequently, additional chill proofing, for example, treatment with PVPP adsorbant (such as Polyclair AT) is routinely used to ensure the products are suitable for the market place. However, use of hydrogen peroxide according to the invention has been found to allow a very significant reduction in the use of the usual additional chill proofing aids especially the expensive proteolytic enzyme. Indeed, it is believed that no such agents need be used in some instances.

      Turning again to the results, aside from obvious significant increases in physical stability of the products produced according to the invention, there were no detrimental effects as far as any of the other important parameters are concerned. There is a slight decrease in protein and formal nitrogen levels and these may be explained on the basis that the treatment has eleiminated low levels of proteolytic activity that might be expected to be derived from bacteria during the early stages of wort production.

      Of significant importance is the finding from extensive taste panel studies that the products produced according to the invention not only exhibit no detrimental flavour characteristics but indeed, have beneficial effects both for initial flavours and flavour stabilities, especially a reduction in "sulphur" characteristics. Some taste characteristics may be attributable to the greater than usual amounts of protein and polyphenol remaining in solution.

      It is also felt that treatment at any early stage of the brewing process according to the present invention renders more consistent one of the raw materials used, may lead to less variances in latter stages of the brewing process and lead to a more consistent process.

Example 9

A.        A 30% adjunct ale was produced as follows:

In the mash mixer, 7180 g of malt was mixed with 23 litres of water and held at a temperature of 118°F for twenty minutes.  Separately in a cooker, 2774 g of corn and a minor amount of malt and calcium chloride in 10.2 litres of water were held at 160°F for 15 minutes, the mass boiled and then mixed with the mash in the mash mixer.  The mash mixer contents were then raised to a temperature of 152°F and maintained at that temperature for thirty minutes following which it was raised to 170°F and maintained for a further six minutes.  The mash mixer contents were then dropped into a lauter tun and provided 60 litres of wort at an adjusted 11.9°P, the pH being 5.1.  That wort was hopped in the kettle and boiled for 90 minutes; pitched with yeast and finished according to established procedures, including a five day fermentation period and final treatment with normal levels of CLEARFIL and PROTESAL.

B.        The above procedure was repeated twice only on those occasions 450 ppm, based on the malt, of hydrogen peroxide was added, in experiment B in the mash mixer according to the present invention and in Experiment C in the lauter tun.

In each instance, the finished product was evaluated for initial haze and in the one week forced haze test, the values obtained being included in Table 2.

TABLE 2

| Experiment | Initial Haze | One Week Forced Haze |
|:----------:|:------------:|:--------------------:|
| A | 80 | 360 |
| B | 85 | 170 |
| C | 105 | 310 |

- 15 -

Discussion

As can be clearly seen from the results contained in Table 2, the addition of hydrogen peroxide into the mash mixer according to the present invention - in practical terms pretreating the malt - results in a very significant increase in stability as indicated by the value obtained in the one week forced haze test for experiment B relative to that obtained for the control Experiment A.

Moreover, the addition of the same amount of hydrogen peroxide in the lauter tun i.e. in effect at the end of the mashing stage, gives no improvement whatsoever.

Example 10

In this series of experiments the same general procedure as laid out in Example 9 for the production of ale was carried out but in this instance hydrogen peroxide in the amount of 450 ppm based on the malt was introduced into the brewing process as follows:

Experiment A - in the mash mixer according to the present invention

Experiment B - in the lauter tun i.e. following completion of the mashing stage; and

Experiment C - is a control brew wherein no hydrogen peroxide was utilized in the process.

All products were treated with CLEARFIL and PROTESAL as in Example 9 and were evaluated for apparent extract, initial and one week forced haze. The results of those evaluations are contained in Table 4.

0066270

TABLE 4

| Experiment | Apparent Extract | Initial Haze | One Week Forced Haze |
|:---:|:---:|:---:|:---:|
| A | 2.20 | 85 | 170 |
| B | 2.10 | 105 | 310 |
| C | 1.90 | 80 | 360 |

## Discussion

The above results illustrate quite clearly that treatment of the malt with hydrogen peroxide as taught by the present invention results in superior product stability characteristics in the product compared with the product obtained using the same brewing process but not excluding the hydrogen peroxide or utilizing hydrogen peroxide at a stage later than that taught by the present invention.

It can also be shown that hydrogen peroxide can readily have adverse effects if introduced into the wort in the fermentor. The hydrogen peroxide, _inter alia_, interferes with the action of the yeast resulting in a relatively high value for apparent extract, in other words, a "hung" fermentation results which is obviously highly undesirable.

## Example 11

The effect on the physical stability of the desired fermented product of varying the amount of hydrogen peroxide used to treat the malt was obtained in a series of experiments wherein lagers were produced according to a standard lager cycle. In each instance, 60 litres of wort having a Plato value of about 11.8 and a pH of of about 5.25 were produced from 6824 g of malt and 2464 g of corn adjunct. The wort in the kettle was hopped and boiled in the usual manner and subsequently pitched with 270 mls of lager yeast and finished to the desired lager product. In the control Experiment A, no hydrogen peroxide was used. In Experiments B, C and D, hydrogen peroxide was added to the mash water prior to the addition of the malt in the usual manner according to the invention so as to pre-treat the malt, the amounts of hydrogen peroxide added being as follows:

Experiment B - 880 ppm;

Experiment C - 440 ppm;

Experiment D - 220 ppm.

all amounts being by weight based on the malt.

As previously, the resulting fermented product, in this case, lager, was evaluated for stability by way of a one week forced haze evaluation and by natural haze evaluation at 0, 1 and 2 month intervals. The results are contained in Table 3.

TABLE 3

| Experiment | Natural Haze (months) | | | One Week Forced Haze |
| | 0 | 1 | 2 | |
| --- | --- | --- | --- | --- |
| A | 70 | 170 | 350 | 300 |
| B | 60 | 50 | 90 | 100 |
| C | 40 | 60 | 140 | 150 |
| D | 60 | 100 | 250 | 250 |

## Discussion

As would be expected, the highest concentration of hydrogen peroxide namely, 880 ppm based on the malt produced the most stable product. Although the difference in stability between that product and the product produced when using 440 ppm of hydrogen peroxide based on the malt was significant, the stability of the latter product was perfectly satisfactory. Consequently, there is no practical advantage to be gained by the increase in the stability of the product, especially when twice the quantity of hydrogen peroxide will be used to obtain it.

The lowest quantity of hydrogen peroxide used, namely 220 ppm based on the malt, also produced a product significantly improved as regards stability compared with the control and, since about 250 FTU is considered satisfactory, as a practical matter, would have insured that the product would have been commercially acceptable rather than, at best, borderline.

In summary, the above results indicate that the advantages of the present invention, from a practical viewpoint are obtained if more than about 200 or, preferably more than about 250 ppm of hydrogen peroxide based on the malt is used to treat the malt and above about 500 ppm of hydrogen peroxide based on the malt, no significant additional practical advantage is to be obtained.

## Example 12

Using the same general procedure for producing a lager beer as described in Example 11, three further experiments were carried out, one producing a control product, no hydrogen peroxide being utilized in the process, and two further experiments utilizing 200 ppm hydrogen peroxide based on the malt and 400 ppm hydrogen peroxide based on the malt respectively, all three products being finished in the normal manner utilizing the usual chill proofing aids.

All three products were then evaluated for chill haze under the conditions and times as laid out in Table 5.

## TABLE 5

| Condition | 0°C 24 Hour | FORCED (55°C°) 6 Days | 20°C 50 Days | 20°C 150 Days |
|---|---|---|---|---|
| Control Lager | 68 | 233 | 237 | 343 |
| 200 ppm $H_2O_2$ | 58 | 138 | 135 | 226 |
| 400 ppm $H_2O_2$ | 55 | 114 | 107 | 148 |

## Discussion

The results clearly show the greatly improved physical stability of products produced according to the present invention and indicate, especially at the higher levels of use of hydrogen peroxide in the treatment of malt, a significantly increased shelf life is to be expected.

However, it may be noted that this series of experiments utilize the usual chill proofing aids in the finishing of the product. Consequently, if desired, the increased shelf life potential may be relinquished in favour of eliminating the use of, or the amount of, chill proofing aids and consequently, maintain the normal stability for the product at a reduced cost.

## Example 13

A.      A control ale was produced utilizing the procedure given above in Example 9 and the same procedure was utilized to produce an ale according to the present invention by treating the malt with hydrogen peroxide at the rate of 450 ppm based on the malt used. Both products were finished in the normal manner utilizing the normal chill proofing aids and each product was evaluated for initial and one week forcing haze (at 55°F). The results are as given in Table 6.

TABLE 6

|  | Initial Haze | One Week Forcing Haze |
|---|---|---|
| Control Ale | 72 | 390 |
| 450 ppm $H_2O_2$ Ale | 61 | 133 |

As previously, the superiority of the ale made according to the invention, as far as stability is concerned is clearly demonstrated.

These two products were challenged by taste panels in triangular difference tests and the results of these tests are contained in Table 7:

TABLE 7

| Test | No. of Verdicts | Correct Verdict |
|---|---|---|
| 1 | 12 | 7 |
| 2 | 14 | 6 |

As the results indicate, no significant differences between the two products was found.  In fact, as noted earlier, treatment according to the present invention did appear to some  panelists to have some beneficial effects, especially a reduction in "sulphur" characteristics.

B.       During the two experiments described in A above, two samples of each brew were extracted from the fermenter and finished off on a smaller scale and  under different conditions to those detailed in A above and, in particular, the products were finished with no chill proofing agents whatsoever.  The finished products in each case were evaluated for initial and one week forcing (at 50°F) haze and the results are contained in Table 8.

TABLE 8

|  | Initial | One Week Forced Haze |
|---|---|---|
| Control Ale | 57 | 999* |
| 450 ppm $H_2O_2$ Ale | 59 | 700 |

*   Off Scale

Discussion

The above indicates that utilizing the process of the present invention, the amount of processing aids utilized may be greatly reduced where particular reference to the usually used proteolytic enzyme (PROTESAL) which is relatively expensive and its elimination or reduction would result in significant cost reduction.

It should be emphasized that exhaustive tests have proved conclusively that the hydrogen peroxide does not survive the brewing process and consequently, there can be no question of residues thereof in the product: it is in fact a true processing aid.

The present invention therefore provides an improved brewing process wherein treatment of the malt practically before mashing, results in a more controlled brewing process and a more stable "clean" product. Moreover, the process also offers the advantage that significant savings may be made by reducing or eliminating the chill proofing aids normally used in the brewing process while still obtaining a fully satisfactory stable commercial product. These advantages are obtained by utilizing what is a completely safe processing aid, (assuming normal good business practices are utilized) hydrogen peroxide, which is already acceptable to various governmental authorities for use in food applications and consequently, if not already specifically approved for use in the production of alcoholic brewery products in any specific country, any such approval should, as it is believed, be readily obtainable.

WE CLAIM:

1.      In a brewing process comprising preparing a malt wort, in a mashing stage, optionally adding an adjunct thereto; boiling same, optionally with the addition of hops, fermenting same to form green beer which is then finished to form the desired product, the improvement comprising preparing said malt wort with malt which has been rendered substantially free of active Gram-positive bacteria by treatment with hydrogen peroxide.

2.      In a brewing process comprising preparing a malt wort, in a mashing stage, optionally adding an adjunct thereto; boiling same, optionally with the addition of hops, fermenting same to form green beer which is then finished to form the desired product, the improvement comprising introducing hydrogen peroxide into the water which forms a mashing liquor and subsequently introducing the malt into said liquor whereupon the malt is rendered substantially free of active Gram-positive bacteria substantially by the start of said mashing stage in the process.

3.      In a brewing process comprising preparing a malt wort, in a mashing stage, optionally adding an adjunct thereto; boiling same, optionally with the addition of hops, fermenting same to form green beer which is then finished to form the desired product, the improvement comprising mashing in the malt mashing liquor which contains up to 1000 ppm based upon the amount of malt to be mashed of hydrogen peroxide.

4.      The process according to claim 1 or 2, wherein the amount of hydrogen peroxide is not more than 1000 ppm.

5.      The process according to claim 1 or 2 or 3, wherein the amount of hydrogen peroxide is from 200 to 500 ppm based on the amount of malt.

6.     The process according to claim 1, 2 or 3, wherein the amount of hydrogen peroxide is from 250 to 500 ppm based on the amount of malt.

7.     The process according to claims 1, 2, or 3 for producing ale, wherein the yeast is an ale-producing yeast and the amount of hydrogen peroxide is from 350 to 500 ppm based on the amount of malt.

8.     The process according to claims 1, 2 or 3 for producing ale, wherein the yeast is an ale-producing yeast and the amount of hydrogen peroxide is about 450 ppm.

9.     The process according to claims 1, 2 or 3 for producing lager, wherein the yeast is a lager-producing yeast and the amount of hydrogen peroxide is from 250 to 350 ppm based on the amount of malt.

10.     The process according to claims 1, 2 or 3, wherein the yeast is a lager-producing yeast and the amount of hydrogen peroxide is about 300 ppm based on the amount of malt.